# EUROPÄISCHE PATENTSCHRIFT

(11) **EP 1 574 373 B1**
(45) Veröffentlichungstag und Bekanntmachung des Hinweises auf die Patenterteilung: **16.09.2009**
(21) Anmeldenummer: 05004262.1
(22) Anmeldetag: 26.02.2005
(51) Int. Cl.: B60J 5/04

(54) **Fahrzeugtür mit einem Fensterrahmen in Schalenbauweise**
Vehicle door comprising a window frame in shell construction
Porte pour véhicule comprenant un cadre de fenêtre en construction de coquille

(30) Priorität: 13.03.2004 DE 102004012397
(43) Veröffentlichungstag der Anmeldung: 14.09.2005
(73) Patentinhaber: Bayerische Motoren Werke Aktiengesellschaft, 80809 München (DE)
(72) Erfinder: Macha, Ulrich, 85435 Erding (DE); Plaum, Michael, 85244 Röhrmoos (DE); Ertl, Harald, 82223 Eichenau (DE)

(56) Entgegenhaltungen:
- DE-A1- 19 835 400
- FR-A1- 2 703 006
- US-A- 5 352 009

## Beschreibung

Die Erfindung betrifft eine Fahrzeugtür mit einem Fensterrahmen in Schalenbauweise.

Aus der EP 0 061 027 A1 ist ein Fensterrahmen einer Fahrzeugtür mit zwei Blechschalen bekannt, die über einen oberen und einen unteren Flansch miteinander verbunden sind. Die beiden Flansche zeigen zumindest im Bereich des oberen Fensterrahmens in zumindest annähernd entgegengesetzte Richtungen und sind annähernd parallel zur Ebene der Fensterscheibe angeordnet.

Die DE 19835400 zeigt eine Fahrzeugtür gemäß dem Oberbegriff des Anspruchs 1.

Aufgabe der Erfindung ist es, den bekannten Fensterrahmen einer Fahrzeugtür zu verbessern, sodass der Fensterrahmen nur mehr eine geringe Höhe aufweist.

Diese Aufgabe wird mit einem Fensterrahmen einer Fahrzeugtür in Schalenbauweise mit den Merkmalen des Patentanspruchs 1 gelöst.

Erfindungsgemäß weist ein Fensterrahmen einer Fahrzeugtür in Schalenbauweise eine innere und eine äußere Blechschale auf, die über zwei Flansche miteinander verbunden sind. Die beiden Flansche zeigen dabei zumindest im Bereich des oberen Fensterrahmens zumindest annähernd in entgegengesetzte Richtungen und sind gegenüber der Ebene der Fensterscheibe mit einem Winkel von mindestens 45° geneigt. Vorteilhafterweise sind die beiden Flansche annähernd lotrecht zur Ebene der Fensterscheibe angeordnet. Die Flansche stehen damit primär nicht mehr nach oben und unten, sondern zu den Seiten hin ab. Damit tragen die Flansche nicht mehr oder zumindest nur noch geringfügig zur Höhe des Fensterrahmens in Richtung der Fensterscheibe bei.

Weitere vorteilhafte Ausgestaltungen sind Gegenstand von Unteransprüchen.

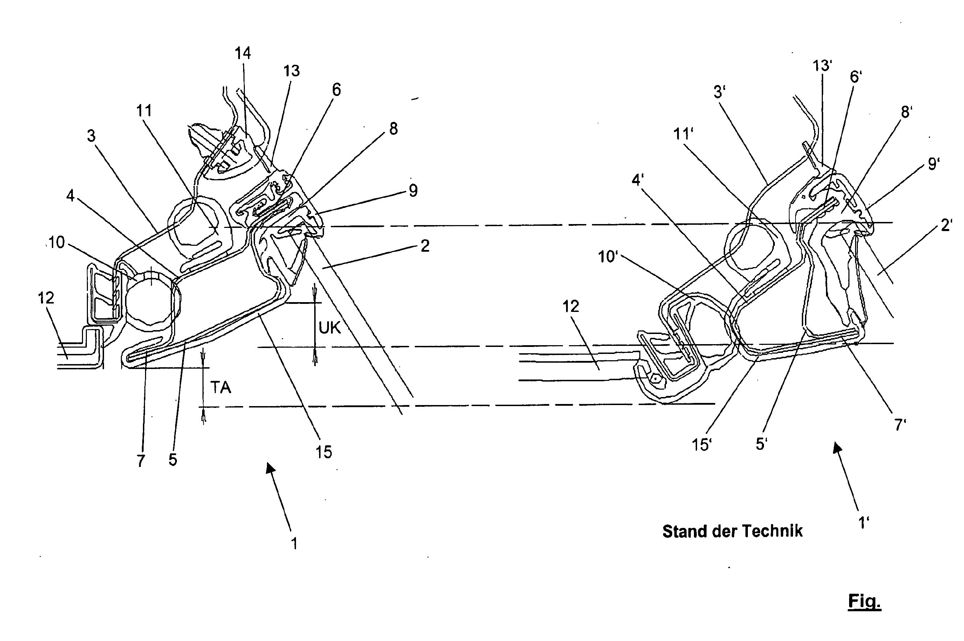

Alle Details und die sich aus der Erfindung ergebenden Vorteile werden im einzelnen anhand eines in der Zeichnung dargestellten Ausführungsbeispiels der Erfindung näher beschrieben. Die einzige Figur zeigt in schematischer Darstellungsweise rechts einen Schnitt durch einen aus dem Stand der Technik bekannten Fensterrahmen und links dazu im Vergleich einen Schnitt durch einen erfindungsgemäßen Fensterrahmen einer vorderen, seitlichen Fahrzeugtür. Einander entsprechende Bauteile weisen dabei dieselben Bezugsziffern auf, beim bekannten Fensterrahmen weisen allerdings alle Bezugszahlen einen Strich dahinter auf.

Zu sehen ist ein Schnitt durch einen oberen Fensterrahmen 1, 1' einer Fahrzeugtür, der die obere Begrenzung für eine in die Fahrzeugtür versenkbare Fensterscheibe 2, 2' bildet und bei geschlossener Fahrzeugtür an einen Dachseitenrahmen 3, 3' der Fahrzeugkarosserie angrenzt. Der Fensterrahmen 1, 1' wird in Schalenbauweise durch eine innere und eine äußere Blechschale 4, 4' und 5, 5' gebildet. Die beiden Blechschalen 4 und 5 bzw. 4' und 5' sind jeweils durch einen oberen und einen unteren Flansch 6 und 7 bzw. 6' und 7' miteinander verbunden. Auf den oberen Flansch 6, 6' ist eine Fensterdichtung 8, 8' aufgesteckt, die die geschlossene Fensterscheibe 2, 2' abdichtet. Der von außen sichtbare Abschnitt dieser Fensterdichtung 8, 8' ist größtenteils durch eine Blende 9, 9' verkleidet, die mit der Fensterdichtung 8, 8' verbunden ist. Der vom Fahrzeuginnenraum aus sichtbare Teil des Fensterrahmens 1, 1' ist ebenfalls mit einer Abdeckung 15, 15' verblendet.

Am Dachseitenrahmen 3, 3' ist eine innere Türdichtung 10, 10' und am Fensterrahmen 1, 1' etwa in der Mitte des oberen Bereiches eine äußere Türdichtung 11, 11' angebracht, die den Fensterrahmen 1, 1' gegenüber dem Dachseitenrahmen 3, 3' abdichten. Die innere Türdichtung 10, 10' liegt zudem mit einem Steg am Innenverkleidungsteil 12, 12' des Fahrzeugdachs an. Zusätzlich ist an der Fensterdichtung 8, 8' eine Dichtlippe 13, 13' angebunden, die an der Fahrzeugaußenseite den Spalt zwischen Fensterrahmen 1, 1' und Dachseitenrahmen 3, 3' bei geschlossener Fahrzeugtür ggfs. zusammen mit einer weiteren am Dachseitenrahmen 3 angebrachten Dichtung 14 optisch verdeckt und verhindert, dass Windgeräusche an dem Spalt entstehen können.

Die Vorteile des erfindungsgemäßen Fensterrahmens 1 werden besonders im Vergleich mit dem bekannten Fensterrahmen 1' deutlich. Der Fensterrahmen 1 baut in der Höhe in Richtung der Fensterscheibe 2 gesehen wesentlich niedriger als der bekannte Fensterrahmen 1'. Dadurch ist der von außen durch die Fensterscheibe 2 hindurch zu sehende Bereich des Fensterrahmens 1 bzw. der Fensterdichtung 8-das sogenannte Schwarzfeld am Scheibenrand - deutlich schmaler, als bei dem bekannten Fensterrahmen 1'. Auch aus dem Fahrzeuginneren wird die Sicht durch den Fensterrahmen 1 weniger als bei dem bekannten Fensterrahmen 1' eingeschränkt: Da die Augenhöhe eines im Fahrzeug sitzenden Passagiers normalerweise deutlich unter der Höhe des Fensterrahmens 1, 1' ist, wird das Blickfeld durch die äußere untere Kante des Dachrahmens 1, 1' begrenzt. Diese äußere untere Kante ist beim erfindungsgemäßen Dachrahmen 1 um das Maß UK höher, als beim bekannten Fensterrahmen 1'. Dadurch reduziert sich beim erfindungsgemäßen Fensterrahmen 1 der Sichtverdeckungswinkel, was die Sicherheit für den Fahrer erhöht.

Außerdem wird beim erfindungsgemäßen Fensterrahmen 1 die Sicht vom Fahrzeuginnenraum aus auf die innere Türdichtung 10 durch den unteren Flansch 7 verdeckt, während beim bekannten Fensterrahmen 1' die innere Türdichtung 10' voll sichtbar ist. Die verdeckte innere Türdichtung 10 beim erfindungsgemäßen Fensterrahmen 1 verbessert die Qualitätsanmutung.

Der erfindungsgemäße Fensterrahmen 1 weist durch den um den Fensterausschnitt umlaufenden Flansch 7 bei gleichbleibendem Rahmenquerschnitt eine hohe Steifigkeit auf. Dadurch können anstelle von Stahlblechen für die innere und äußere Blechschale 4 und 5 auch Leichtmetallbleche beispielsweise aus Aluminium zum Einsatz kommen. Leichtmetallbleche haben gegenüber von normalen Stahlblechen eine geringere Tiefziehfähigkeit. Dies ist beim erfindungsgemäßen Fensterrahmen 1 aber kein Problem, da die innere und äußere Blechschale 4 und 5 gegenüber der inneren und der äußeren Blechschale 4' und 5' beim bekannten Fensterrahmen 1' eine wesentlich geringere Ziehtiefe aufweisen. Daher können beim erfindungsgemäßen Fensterrahmen 1 problemlos Leichtmetallbleche eingesetzt werden.

Der erfindungsgemäße Fensterrahmen 1 ermöglicht gegenüber dem dargestellten bekannten Fensterrahmen 1' einen verbesserten Einstiegskomfort, da der Türausschnitt größer ist, weil der unterste Punkt durch den Flansch 7 gegeben ist. Beim bekannten Fensterrahmen 1' dagegen wird der unterste Punkt durch die innere Türdichtung 10' gebildet, die um das Maß TA weiter nach unten in den Fahrgastraum ragt, als der Flansch 7.

Der erfindungsgemäße Fensterrahmen 1 erstreckt sich umlaufend von der Türbrüstung aus um die Fensterscheibe 2 herum wieder bis zur Türbrüstung. Er verläuft bei geschlossener Fahrzeugtür oberhalb der Türbrüstung parallel zur A-Säule der Fahrzeugkarosserie bis zum Dach, entlang des Dachseitenrahmens 3 bis zur B-Säule und parallel zu dieser wieder zumindest bis zur Türbrüstung hinab. Die in der Figur dargestellte Anordnung im oberen Bereich entlang des Dachseitenrahmens 3 ist analog übertragbar auf die Bereiche des Fensterrahmens 1 entlang der A- und der B-Säule.

## Patentansprüche

1. Fahrzeugtür mit einem Fensterrahmen (1) und einer Fensterscheibe (2), wobei der Fensterrahmen in Schalenbauweise eine innere und eine äußere Blechschale (4 und 5) aufweist, die über zwei Flansche (6, 7) miteinander verbunden sind, wobei die beiden Flansche (6, 7) zumindest im Bereich des oberen Fensterrahmens (1) gegenüber der Ebene der Fensterscheibe (2) mit einem Winkel von mindestens 45° geneigt sind , **dadurch gekennzeichnet dass** die beiden Flansche zumindest im Bereich des oberen Fensterrahmens (1) zumindest annähernd in entgegengesetzte Richtungen zeigen

2. Fahrzeugtür nach Anspruch 1, **dadurch gekennzeichnet, dass** die beiden Flansche (6, 7) annähernd lotrecht zur Ebene der Fensterscheibe (2) angeordnet sind.

3. Fahrzeugtür nach Anspruch 1 oder 2, **dadurch gekennzeichnet, dass** auf den zur Fahrzeugaußenseite zugewandten Flansch (6) eine Dichtung (8) für die Fensterscheibe (2) aufsteckbar ist.

## Claims

1. A vehicle door with a window frame (1) and window glass (2), wherein the window frame has an inner and outer sheet metal shell (4 and 5) in a shell mode of construction, which are connected to one another by means of two flanges (6, 7), the two flanges (6, 7) being inclined, at least in the region of the upper window frame (1) relative to the plane of the window glass (2) at an angle of at least 45°, **characterised in that** the two flanges, at least in the region of the upper window frame (1), point in at least virtually opposite directions.

2. A vehicle door according to claim 1, **characterised in that** the two flanges (6, 7) are arranged virtually perpendicular to the plane of the window glass (2).

3. A vehicle door according to claim 1 or claim 2, **characterised in that** a seal (8) for the window glass (2) can be placed on the flange (6) facing the outside of the vehicle.

## Revendications

1. Portière de véhicule comportant un cadre de fenêtre (1) et une vitre (2), le cadre de fenêtre ayant une structure de coquille avec une coquille intérieure en tôle et une coquille extérieure en tôle (4 et 5) reliées par deux brides (6, 7), les deux brides (6, 7) sont inclinées au moins dans la zone du cadre supérieur de fenêtre (1), d'un angle d'au moins 45° par rapport au plan de la vitre (2),
**caractérisée en ce que**
dans la zone du cadre supérieur de fenêtre (1), les deux brides sont dirigées au moins sensiblement dans des directement opposées.

2. Portière de véhicule selon la revendication 1,
**caractérisée en ce que**
les deux brides (6, 7) sont installées pratiquement horizontalement par rapport au plan de la vitre (2).

3. Portière de véhicule selon l'une des revendications 1 ou 2,
**caractérisée en ce qu'**
un joint (8) pour la vitre (2) est emmanché sur la bride (6) tournée vers le côté extérieur du véhicule.
